# EUROPÄISCHE PATENTANMELDUNG

(11) **EP 3 514 186 A1**
(43) Veröffentlichungstag der Anmeldung: **24.07.2019**
(21) Anmeldenummer: 18152249.1
(22) Anmeldetag: 18.01.2018
(51) Int. Cl.: C08G 18/08, C08G 18/32, C08G 18/38, C08G 18/66, C08G 18/72, C08G 18/73, C08G 18/10, C08G 18/42, C09J 175/06

(54) **KLEBSTOFFE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft Dispersionsklebstoffe auf Basis wässriger Polyurethan- bzw. Polyurethan-Harnstoffdispersionen, die die Anforderungen für die industrielle Schuhfertigung erfüllen, insbesondere bei gleichzeitiger Trocknung und Aktivierung bei niedrigen Temperaturen, sowie die Verwendung der Dispersionsklebstoffe zur Herstellung von Klebstoffverbunden.

## Beschreibung

Die Erfindung betrifft wässrige Klebstoffe auf Basis wässriger Polyurethan- bzw. Polyurethan-Harnstoffdispersionen, die Pentamethylendiisocyanat (PDI) enthalten, ein Verfahren zu deren Herstellung, sowie die Verwendung der Dispersionsklebstoffe zur Herstellung von Klebstoffverbünden.

Klebstoffe auf Basis von wässrigen Polyurethan-Dispersionen haben sich weltweit in anspruchsvollen industriellen Anwendungen etabliert, zum Beispiel bei der Schuhfertigung, der Verklebung von Teilen für die KFZ-Innenausstattung, der Folienlaminierung oder der Verklebung von textilen Substraten. Die Herstellung wässriger Polyurethan- bzw. Polyurethan-Polyharnstoff-Dispersionen ist bekannt.

Bei der Verwendung solcher Dispersionen zum Kleben von Substraten wird häufig nach dem Thermoaktivierverfahren gearbeitet. Hierbei wird die Dispersion auf das Substrat aufgebracht, und nach vollständiger Verdunstung des Wassers wird die Klebstoffschicht durch Erwärmen (z.B. mit einem Infrarotstrahler) und Aufschmelzen des teilkristallinen Polymers aktiviert und in einen klebfähigen Zustand überführt. Die Temperatur, bei der der Klebstofffilm klebrig wird, bezeichnet man als Aktiviertemperatur. Daher ist auch ein Verfahren zum Kleben von Substraten, in welchem auf das oder die zu verklebenden Substrate eine erfindungsgemäße Zubereitung zur Erzeugung einer Klebstoffschicht aufgebracht wird, nach vollständiger Verdunstung des Wassers die so erhaltene Klebstoffschicht durch Erwärmen auf mindestens die Aktiviertemperatur der Schicht und Aufschmelzen des teilkristallinen Polymers aktiviert wird und abschließend das oder die Substrate gefügt werden Gegenstand der vorliegenden Erfindung. Es ist auch möglich, nach Erzeugung der Klebstoffschicht in einem Schritt die Substrate unter Anwendung hoher Pressdrücke zu fügen und gleichzeitig die Klebstoffschicht durch Erwärmen auf mindestens die Aktiviertemperatur zu aktivieren, beispielsweise in beheizbaren Pressen.

Kurze Trocknungszeiten bei möglichst geringen Temperaturen sowie niedrige Aktiviertemperaturen würden einen möglichst effizienten, kostengünstigen und energiesparenden Prozess ermöglichen.

Bei der industriellen Schuhfertigung wird sehr viel mit Handarbeit gearbeitet. Nach Trocknung und Thermoaktivierung des Klebstoffes werden die Sohle und der Schaft zunächst von Hand zusammengefügt und anschließend verpresst. Daraus ergeben sich mehrere Anforderungen an den Klebstoff: ausgeprägte Klebrigkeit im aktivierten Zustand (hoher Tack), Erhalt der Klebrigkeit über einen Zeitraum von mehreren Minuten, hohe Festigkeit bei möglichst niedrigen Pressdrücken und gute Anfangsfestigkeiten.

Klebstoffe auf Basis von wässrigen Polyurethan- bzw. Polyurethan-Polyharnstoff-Dispersionen werden beispielsweise in der US-A 4 870 129 beschrieben. Diese enthalten als Isocyanate eine Mischung aus 1-Isocyanato-3,3,5-trimethyl-5-isocyanatomethyl-cyclohexan (Isophorondiisocyanat, IPDI) und Hexamethylendiisocyanat (HDI) und eignen sich prinzipiell für die Anwendung des Thermoaktivierverfahrens.

Ein Nachteil dieser Klebstoffe ist jedoch, dass sie zwar bei Aktivierungstemperaturen um 70°C sehr gute Klebverbünde ergeben, bei niedrigen Aktivierungstemperaturen um 50°C jedoch für die Schuhfertigung unzureichende Tack-Werte zeigen, wobei sowohl die Stärke als auch die Dauer der Klebrigkeit nicht ausreichend sind. Als Tack wird die Fähigkeit eines Materials bezeichnet bei geringem Anpressdruck und kurzer Einwirkzeit eine merkliche Haftung auszubilden.

Klebstoffe auf Basis von wässrigen Polyurethan-Polyharnstoff-Dispersionen, die lediglich Hexamethylendiisocyanat (HDI) als Isocyanatkomponente enthalten, weisen verbesserte Tack-Werte nach Aktivierung bei niedrigen Temperaturen auf, allerdings verlieren sie diese Eigenschaft nach Lagerung der Dispersion bei niedrigen Temperaturen unter 10°C.

Die Aufgabe der vorliegenden Erfindung bestand in der Bereitstellung von Dispersionsklebstoffen auf Basis von wässriger Polyurethan- bzw. Polyurethan-Harnstoffdispersionen, die die genannten Anforderungen für die industrielle Schuhfertigung erfüllen und bei gleichzeitiger Trocknung und Aktivierung bei niedrigen Temperaturen um 50°C im Vergleich zu rein Hexamethylendiisocyanat basierten Klebstoffen vergleichbar gute Tack-Werte aufweisen, wobei diese jedoch auch nach Lagerung der Dispersionen bei niedrigen Temperaturen unter 10°C erhalten bleiben sollen. Diese Anforderung ist insofern von großer Relevanz, da Dispersionsklebstoffe im Winter und in kälteren Regionen häufig bei diesen Temperaturen transportiert und gelagert werden.

Es konnte gezeigt werden, dass teilkristalline Klebstoffe auf Basis von wässrigen Polyurethan- bzw. Polyurethan-Polyharnstoff-Dispersionen, deren Polymer als Isocyanatkomponente lediglich Hexamethylendiisocyanat (HDI), Pentamethylendiisocyanat (PDI) oder Mischungen von HDI und PDI enthalten, die Anforderungen für die industrielle Schuhfertigung erfüllen und bei gleichzeitiger Trocknung und Aktivierung bei niedrigen Temperaturen um 50°C hervorragende Tack-Werte aufweisen. Völlig überraschend wurde jedoch gefunden, dass diese Eigenschaft nach Kältelagerung bei Temperaturen zwischen 3°C und 10°C zwar verloren geht, wenn der HDI-Gehalt > 50 mol-% beträgt, jedoch nicht bei einem PDI-Gehalt von mindestens 50 mol-%.

Gegenstand der vorliegenden Erfindung sind somit Zubereitungen auf Basis wässriger Polyurethan- bzw. Polyurethan-Harnstoff-Dispersionen enthaltend ein entsprechendes Polymer, also ein Polyurethan oder einen Polyharnstoff oder Mischpolymere aus diesen, aufgebaut aus
A) mindestens einem kristallinen oder teilkristallinen difunktionellen Polyesterpolyol mit einem zahlenmittleren Molekulargewicht von wenigstens 400 g/mol und einer Schmelztemperatur von wenigstens 40°C und einer Schmelzwärme von wenigstens 20 J/g
B) optional mindestens einer difunktionellen Polyolkomponente mit einem zahlenmittleren Molekulargewicht von 62 bis 399 g/mol,
C) einer Isocyanatkomponente bestehend aus Pentamethylendiisocyanat oder einer Mischung von Pentamethylendiisocyanat und Hexamethylendiisocyanat mit mindestens 50 mol-% Pentamethylendiisocyanat
D) mindestens einer gegenüber Isocyanat reaktiven Komponente, die mindestens eine ionische oder potentiell ionische Gruppe trägt,
   und
E) optional weiteren gegenüber Isocyanat reaktiven Komponenten
dadurch gekennzeichnet, dass das Polymer nach der Trocknung kristallin oder teilkristallin ist sowie eine Schmelztemperatur von wenigstens 40° C und eine Schmelzwärme von wenigstens 10 J/g aufweist.

Die Verwendung dieser Zubereitungen als Thermoaktivierklebstoffe ist ebenfalls Gegenstand der vorliegenden Erfindung.

Die erfindungsgemäßen wässrigen Dispersionen enthalten 15 bis 60 Gew.-% Polymer und 40 bis 85 % Wasser, bevorzugt 30 bis 50 Gew.-% Polymer und 50 bis 70 Gew.-% Wasser, besonders bevorzugt 40 bis 50 Gew.-% Polymer und 50 bis 60 Gew.-% Wasser.

Das Polymer enthält 50 bis 95 Gew.-% des Bestandteils A), 0 bis 10 Gew.-% des Bestandteils B), 4 bis 25 Gew.-% des Bestandteils C), 0,5 bis 10 Gew.-% des Bestandteils D) und 0 bis 30 Gew.-% des Bestandteils E), wobei die Summe der Bestandteile 100 Gew.-% ergibt.

In einer bevorzugten Form der Erfindung enthält das Polymer 65 bis 92 Gew.-% des Bestandteils A), 0 bis 5 Gew.-% des Bestandteils B), 6 bis 15 Gew.-% des Bestandteils C), 0,5 bis 5 Gew.-% des Bestandteils D) und 0 bis 25 Gew.-% des Bestandteils E), wobei die Summe der Bestandteile 100 Gew.-% ergibt.

In einer besonders bevorzugten Form der Erfindung enthält das Polymer 75 bis 92 Gew.-% des Bestandteils A), 0 bis 5 Gew.-% des Bestandteils B), 8 bis 15 Gew.-% des Bestandteils C), 0,5 bis 4 Gew.-% des Bestandteils D) und 0 bis 15 Gew.-% des Bestandteils E), wobei die Summe der Bestandteile 100 Gew.-% ergibt.

In einer ganz besonders bevorzugten Form der Erfindung enthält das Polymer 80 bis 90 Gew.-% des Bestandteils A), 0 bis 3 Gew.-% des Bestandteils B), 8 bis 14 Gew.-% des Bestandteils C), 0,5 bis 3 Gew.-% des Bestandteils D) und 0 bis 10 Gew.-% des Bestandteils E), wobei die Summe der Bestandteile 100 Gew.-% ergibt.

Als kristalline oder teilkristalline difunktionelle aliphatische Polyesterpolyole A) kommen Polyesterpolyole in Betracht, die auf linearen Dicarbonsäuren und/oder deren Derivaten, wie Anhydride, Ester oder Säurechloride und bevorzugt aliphatischen, linearen Polyolen basieren. Geeignete Dicarbonsäuren sind beispielsweise Adipinsäure, Bernsteinsäure, Sebacinsäure oder Dodecandisäure. Bevorzugt sind Bernsteinsäure, Adipinsäure und Sebacinsäure, besonders bevorzugt Bernsteinsäure und Adipinsäure, ganz besonders bevorzugt ist Adipinsäure. Diese werden in Mengen von mindestens 90 mol-%, bevorzugt von 95 bis 100 mol-%, bezogen auf die Gesamtmenge aller Carbonsäuren, eingesetzt.

Die difunktionellen Polyesterpolyole A) können beispielsweise durch Polykondensation von Dicarbonsäuren mit Polyolen hergestellt werden. Die Polyole haben bevorzugt ein Molgewicht von 62 bis 399 g/mol, bestehen aus 2 bis 12 C-Atomen, sind vorzugsweise unverzweigt, difunktionell und weisen bevorzugt primäre OH-Gruppen auf.

Bevorzugte Polyolkomponenten für die Polyesterpolyole A) sind Butandiol-1,4 und Hexandiol-1,6, besonders bevorzugt ist Butandiol-1,4.

Die Polyesterpolyole A) können aus einem oder mehreren Polyolen aufgebaut sein, in einer bevorzugten Ausführungsform der vorliegenden Erfindung sind sie nur aus einem Polyol aufgebaut.

Wenn die kristallinen oder teilkristallinen difunktionellen Polyesterpolyole mit einem zahlenmittleren Molekulargewicht von wenigstens 400 g/mol und einer Schmelztemperatur von wenigstens 40°C eine Schmelzwärme von wenigstens 20 J/g aufweisen, so hat das unter Verwendung desselben hergestellte Polymer regelmäßig eine Schmelzwärme von wenigstens 10 J/g. Falls gewünscht kann eine Adjustierung der Schmelzwärme des Polymers durch eine leichte Veränderung des Gehaltes an Polyesterpolyol A) in der Zusammensetzung oder durch eine geringe Variation der Schmelzwärme des Polyesterpolyols erreicht werden. Diese Maßnahme erfordert lediglich orientierende Versuche und liegt völlig innerhalb der praktischen Erfahrung des Durchschnittsfachmanns auf diesem Gebiet.

Die Herstellung von Polyesterpolyolen A) ist aus dem Stand der Technik bekannt.

Das zahlenmittlere Molekulargewicht der Polyesterpolyole A) liegt zwischen 400 und 4000 g/mol, bevorzugt zwischen 1000 und 3000 g/mol, besonders bevorzugt zwischen 1500 und 2500 g/mol, ganz besonders bevorzugt zwischen 1800 und 2400 g/mol.

Die Schmelztemperatur der kristallinen bzw. teilkristallinen Polyesterpolyole liegt mindestens bei 40°C, bevorzugt zwischen 40 und 80°C, besonders bevorzugt zwischen 42 und 60°C und ganz besonders bevorzugt zwischen 45 und 52°C. Die Schmelzwärme beträgt mindestens 20 J/g, bevorzugt mindestens 25 J/g und besonders bevorzugt mindestens 40 J/g.

Als difunktionellen Polyolkomponente B) mit einem zahlenmittleren Molekulargewicht von 62 bis 399 g/mol geeignet sind bevorzugt aliphatische oder cycloaliphatische, lineare oder verzweigte Polyole. Besonders bevorzugte Komponenten B) sind Monoethylenglykol, Propandiol-1,3, Propandiol-1,2, Butandiol-1,4 oder Hexandiol-1,6. Besonders bevorzugt sind Butandiol-1,4 und Hexandiol-1,6, ganz besonders bevorzugt ist Butandiol-1,4.

Als Isocyanatkomponente C) ist Pentamethylendiisocyanat geeignet. Weiterhin geeignet sind Mischungen aus Pentamethylendiisocyanat und Hexamethylendiisocyanat mit einem Gehalt von mindestens 50 mol-% Pentamethylendiisocyanat. Die Isocyanatkomponente C) kann in geringem Umfang weitere Diisocyanate enthalten. Bevorzugt enthält die Isocyanatkomponente C) < 5 mol-% weitere Diisocyanate, besonders bevorzugt enthält die Isocyanatkomponente C) jedoch keine weiteren Diisocyanate.

Bevorzugte gegenüber Isocyanat reaktive Komponenten D), die mindestens eine ionische oder potentiell ionische Gruppe trägt, sind Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und deren Alkali- und Ammoniumsalze. Beispiele sind Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III). Für die Salzbildung gut geeignet sind Natrium-, Kalium-, Lithium- und Calcium-Hydroxid sowie tertiäre Amine wie Triethylamin, Dimethylcyclohexylamin und Ethyldiisopropylamin. Es können auch andere Amine zur Salzbildung eingesetzt werden, wie z.B. Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Weiter als Komponente D) geeignet sind durch Zugabe von Säuren in kationische Gruppen überführbare Bausteine wie N-Methyl-diethanolamin.

Besonders bevorzugte Komponenten D) sind solche, die über Carboxy- und/oder Carboxylat- und/oder Sulfonatgruppen verfügen.

Ganz besonders bevorzugt sind die Natriumsalze der N-(2-Aminoethyl)-2-aminoethansulfonsäure und der N-(2-Aminoethyl)-2-aminoethancarbonsäure, insbesondere der N-(2-Aminoethyl)-2-aminoethansulfonsäure. Weiterhin ganz besonders bevorzugt sind die Salze der Dimethylolpropionsäure.

Gegenüber Isocyanat reaktive Komponenten E) können beispielsweise Polyoxyalkylenether, die mindestens eine Hydroxy- oder Aminogruppe enthalten, sein. Die häufig verwendeten Polyalkylenoxidpolyetheralkohole sind in an sich bekannter Weise durch Alkoxylierung geeigneter Startermoleküle zugänglich. Für die Alkoxylierungsreaktion geeignete Alkylenoxide sind insbesondere Ethylenoxid und Propylenoxid, die einzeln oder auch zusammen bei der Alkoxylierungsreaktion eingesetzt werden können.

Weitere gegenüber Isocyanat reaktive Komponenten E) sind beispielsweise Monoamine, Diamine und / oder Polyamine sowie deren Gemische.

Beispiele für Monoamine sind aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin oder 2-Propanolamin. Beispiele für Diamine sind 1,2-Ethandiamin, 1,6-Hexamethylendiamin, 1-Amino-3,3,5-trimethyl-5-aminomethyl-cyclohexan (Isophorondiamin), Piperazin, 1,4-Diamino-cyclohexan und Bis-(4-amino-cyclohexyl)-methan. Weiterhin kommen Adipinsaeuredihydrazid, Hydrazin bzw. Hydrazinhydrat in Frage. Weitere Beispiele sind Aminoalkohole, d. h. Verbindungen, die in einem Molekül Amino- und Hydroxylgruppen enthalten, wie z. B. 1,3-Diamino-2-propanol, N-(2-Hydroxyethyl)-ethylendiamin oder N,N-Bis(2-Hydroxyethyl)-ethylendiamin. Beispiele für Polyamine sind Diethylentriamin und Triethylentetramin.

In einer bevorzugten Form der Erfindung enthält das erfindungsgemäße Polymer zur Einstellung der Molmasse mindestens ein Monoamin und / oder mindestens ein Diamin als gegenüber Isocyanat reaktive Komponente E).

Das die Komponenten A), B), C), D) und optional E) enthaltende Polymer ist nach der Trocknung kristallin oder teilkristallin. Die Schmelztemperatur liegt mindestens bei 40° C, bevorzugt zwischen 40 und 80° C, besonders bevorzugt zwischen 42 und 60°C und ganz besonders bevorzugt zwischen 45 und 52° C. Die Schmelzwärme beträgt mindestens 10 J/g, bevorzugt mindestens 20 J/g und besonders bevorzugt mindestens 30 J/g.

Zur Herstellung der erfindungsgemäßen wässrigen Polyurethan- bzw. Polyurethan-Harnstoff-Dispersonen können sämtliche, aus dem Stand der Technik bekannte Verfahren wie Emulgator-Scherkraft-, Aceton-, Prepolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671-1682). Bevorzugt sind das Schmelz-Emulgier-, Prepolymer-Misch- und das AcetonVerfahren. Besonders bevorzugt ist das Acetonverfahren. Die Anwendung und Durchführung des Acetonverfahrens ist Stand der Technik und dem Fachmann z.B. aus der EP 0 232 778 bekannt.

Die Klebstoffzusammensetzungen enthaltend die erfindungsgemäßen Dispersionen können alleine oder mit den in der Beschichtungs- und Klebstofftechnologie bekannten Bindemitteln, Hilfsstoffen und Zugschlagstoffen, insbesondere Emulgatoren und Lichtschutzmitteln wie UV-Absorbern und sterisch gehinderte Aminen (HALS), weiterhin Antioxidantien, Füllstoffen und Hilfsmitteln, z.B. Antiabsetzmittenl, Entschäumungs- und/oder Netzmitteln, Verlaufmitteln, Reaktiv-Verdünner, Weichmachern, Katalysatoren, Hilfslösemitteln und/oder Verdickern und Additiven, wie beispielsweise Pigmente, Farbstoffe oder Mattierungsmittel eingesetzt werden. Auch Klebrigmacher ("Tackifier") können zugegeben werden.

Die Additive können den erfindungsgemäßen Dispersionen unmittelbar vor der Verarbeitung zugegeben werden. Es ist aber auch möglich, zumindest einen Teil der Additive vor oder während der Dispergierung des Bindemittels zuzugeben.

Die Auswahl und die Dosierung dieser Stoffe, die den Einzelkomponenten und/oder der Gesamtmischung zugegeben werden können, sind dem Fachmann prinzipiell bekannt und können ohne ungebührlich hohen Aufwand auf den speziellen Anwendungsfall zugeschnitten durch einfache Vorversuche ermittelt werden.

Ein weiterer Gegenstand der vorliegenden Erfindung sind Zweikomponenten(2K)-Klebstoffzusammensetzungen, enthaltend die erfindungsgemäßen Dispersionen und mindestens einen Vernetzer. Bevorzugte Vernetzer sind Isocyanate, Carbodiimide und Aziridine. Besonders bevorzugt sind Isocyanate und Carbodiimide, ganz besonders bevorzugt sind Isocyanate.

Bei den Isocyanaten handelt es sich um Polyisocyanatverbindungen mit mindestens zwei Isocyanatgruppen pro Molekül. Das Polyisocanat wird dabei vor der Anwendung zugesetzt (2K-Verarbeitung). Bevorzugt werden in diesem Fall Polyisocyanatverbindungen eingesetzt, die in Wasser emulgierbar sind. Dies sind z.B. die in der EP-A 0 206 059, DE-A 31 12 117 oder DE-A 100 24 624 beschriebenen Verbindungen. Eingesetzt werden die Polyisocyanatverbindungen in einer Menge von 0,1 bis 20 Gew.-%, bevorzugt 0,5 bis 10 Gew.-%, besonders bevorzugt 1,5 bis 6 Gew.-%, bezogen auf die wässrige Dispersion.

Bei den Carbodiimidvernetzer handelt es sich bevorzugt um Carbodiimide, die in Wasser dispergiert, emulgiert oder gelöst bzw. in Wasser dispergierbar, emulgierbar und/oder löslich sind.

Bevorzugt sind Carbodiimidstrukturen enthaltende Vernetzer, die durchschnittlich 3 bis 20, und besonders bevorzugt 4 bis 8 Carbodiimidstruktureinheiten je Molekül enthalten.

Solche Carbodiimidvernetzer können z.B. durch Carbodiimidisierung von Diisocyanaten wie z.B. Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanato-dicyclohexyl-propan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat, ggf. unter Mitverwendung von monofunktionellen Isocyanaten wie z.B. Stearylisocyanat, Phenylisocyanat, Butylisocyanat, Hexylisocyanat oder/und höherfunktionellen Isocyanaten wie Trimere, Uretdione, Allophanate, Biurete der beispielhaft genannten Diisocyanate und anschließender, gleichzeitiger oder auch vorhergehender Umsetzung mit hydrophilierenden Komponenten, z.B. mono- oder difunktionelle Polyethern auf Basis von auf Alkoholen oder Aminen gestartete Ethylenoxid-Polymeren oder Ethylenoxid/Propylenoxid-Copolymeren erhalten werden.

Bevorzugte Carbodiimidvernetzer werden durch Carbodiimidisierung von 1-Isocyanato-3,3,5-trimethyl-5-isocyanatomethyl-cyclohexan und/oder 4,4'-Diisocyanato-dicyclohexyl-methan erhalten.

Der Einsatz von gemischten Carbodiimide, welche z.B. Carbodiimide auf Basis unterschiedlicher Isocyanate enthalten, ist ebenfalls möglich.

Die Klebstoffe eignen sich zum Verkleben beliebiger Substrate wie z. B. Papier, Pappe, Holz, Textilien, Metall, Kunststoffe, Leder oder mineralischer Materialen.

Besonders eignen sich die erfindungsgemäßen Klebstoffe zum Kleben von Gummimaterialien wie z. B. Natur- und Synthesekautschuken, verschiedenen Kunststoffen wie Polyurethanen, Polyvinylacetat, Polyvinylchlorid, insbesondere weichmacherhaltigem Polyvinylchlorid. Besonders bevorzugt ist die Verwendung zum Verkleben von Sohlen aus diesen Materialien, insbesondere auf Basis von Polyvinylchlorid, insbesondere weichmacherhaltigem Polyvinylchlorid oder von Polyethylenvinylacetat- oder Polyurethan-Elastomerschaum mit Schuhschäften aus Leder oder Kunstleder.

Weiterhin sind die erfindungsgemäßen Klebstoffe besonders geeignet zur Verklebung von Folien auf Basis Polyvinylchlorid oder weichmacherhaltigem Polyvinylchlorid mit Holz.

Die Verarbeitung der erfindungsgemäßen Klebstoffe kann nach den bekannten Methoden der Klebstofftechnologie bezüglich der Verarbeitung von wässrigen Dispersionsklebstoffen erfolgen. Insbesondere eignen sich die erfindungsgemäßen Klebstoffe zum Kleben von Substraten nach dem Thermoaktivierverfahren. Bei diesem wird die Dispersion auf das Substrat aufgebracht und nach vollständiger Verdunstung des Wassers wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur. Um ein ausreichend schnelles Aufschmelzen der kristallinen bzw. teilkristallinen Segmente im Klebstoffpolymer zu erzielen, ist im Allgemeinen eine Aktiviertemperatur deutlich über der Schmelztemperatur erforderlich.

Überraschenderweise weisen die erfindungsgemäßen Klebstoffdispersionen bei einem Verfahren mit gleichzeitiger Trocknung und Aktivierung bei niedrigen Temperaturen im Bereich von 50°C im Vergleich zum Stand der Technik verbesserte Tack-Werte auf. Dieser Vorteil geht auch nach Kältelagerung bei Temperaturen zwischen 3°C und 10°C, wie sie bei Transport und Lagerung der Dispersionen häufig vorkommen, nicht verloren. Damit ermöglichen sie einen möglichst effizienten, kostengünstigen und energiesparenden Klebeprozess. Die Verwendung der erfindungsgemäßen Klebstoffdispersionen zur Herstellung von Klebeverbünden nach einem Verfahren mit gleichzeitiger Trocknung und Aktivierung bei niedrigen Temperaturen im Bereich von 50°C ist ebenfalls Gegenstand der vorliegenden Erfindung.

Ein Klebstoffverbund, enthaltend mit den erfindungsgemäßen Dispersionen verklebte Substrate und Flächengebilde, ist ebenfalls Gegenstand der vorliegenden Anmeldung.

### Beispiele

Die Bestimmung der Schmelztemperatur und der Schmelzenthalpie des getrockneten Polymers erfolgte mittels Differential Scanning Calorimetry (DSC):
Es wurden jeweils getrocknete Polymerfilme durch Ausgießen der Dispersionen in Teflonschalen mit anschließender siebentägiger Trocknung bei Zimmertemperatur erzeugt. Aus diesen Filmen wurden Stücke einer Masse von 10 mg ausgeschnitten und in DSC-Tiegel gefüllt, die dann mit Deckeln in der Tiegelpresse verschlossen wurden. Die Tiegel setzte man bei RT in die Messzelle des Kalorimeters und kühlte auf -100°C. Es folgen drei Aufheizungen im Temperaturbereich von - 100°C bis +150° C. Die Heizrate betrug 20 K/min, zwischen dem ersten und zweiten Heizlauf wurde mit 320 K/min abgekühlt, zwischen dem zweiten und dritten mit 20 K/min. Die thermische Kopplung von Kühlblock und Messzelle erfolgte durch Spülung mit Stickstoff, ein Kompressor kühlte die Messzelle. Zur Bestimmung der Schmelztemperatur und der Schmelzenthalpie wurde dritte Aufheizung ausgewertet. Das verwendete Gerät war ein Kalorimeter Pyris Diamond DSC der Firma Perkin-Elmer.

Bestimmung kristalliner Anteile des Polymers in den Polymertröpfchen der Dispersionen nach Lagerung bei Raumtemperatur (14 Tage) und nach 24 h Kältelagerung bei 5° C mittels Differential Scanning Calorimetry (DSC):
Die Dispersionen werden ohne Vorkonditionierung im Verlauf einer Aufheizung von +10° C bis +70° C mit einer Heizrate von 20 K/min (Kühlrate 320K/min) gemessen mit einem Kalorimeter Pyris Diamond DSC der Fa. Perkin-Elmer. Dazu werden von den angelieferten Dispersionen 10 mg in druckdichte Al-Tiegel (Flüssigkeitskapsel) eingewogen, die Tiegel in einer Tiegelpresse mit einem Deckel verschlossen. Die thermische Kopplung von Kühlblock und Messzelle erfolgte durch Spülung mit Stickstoff.

Tack-Messung an SBR-Substraten (SBR = Styrol-Butadien-Kautschuk) nach Lagerung der Dispersionen bei Raumtemperatur (14 Tage) bzw. 5° C (24 Stunden, anschließend 1 Tag bei Raumtemperatur):
Die Tack-Messung ist ein Verfahren zur anwendungstechnischen Beurteilung der Adhäsionseigenschaften von Klebstoffen. Als Tack wird die Fähigkeit eines Materials bezeichnet, bei geringem Anpressdruck und kurzer Einwirkzeit eine merkliche Haftung auszubilden.

Dazu werden 2 streifenförmige, halogenierte SBR-Substrate (20 x 96 mm) mechanisch aufgerauht, mit Methylethylketon (MEK) abgewischt und 3 Minuten bei 50° C im Umlufttrockenschrank getrocknet. Anschließend werden die Streifen mit Klebstoff auf einer 20 x 75 mm großen Fläche eingestrichen, 3 Minuten bei 50° C Umluft getrocknet und aktiviert.

Nach dem Aktivieren werden jeweils 2 Streifen sofort, sowie nach 2 und nach 4 Minuten mit 1 bar Druck 10 Sekunden miteinander verpresst und unmittelbar danach die Sofortschälfestigkeit mit einer Zugprüfmaschine (Geschwindigkeit 100mm/min.) gemessen.

### Beispiel 1 (erfindungsgemäß):

100 mol-% PDI (bezogen auf die Isocyanatkomponente)
506,3 g eines Polyesterdiols aus 1,4-Butandiol und Adipinsäure der OH-Zahl 50 mit einer Schmelztemperatur von 49° C und einer Schmelzenthalpie von 80 J/g werden 1 Stunde bei 110° C und 15 mbar entwässert. Bei 60° C werden 2,25 g 1,4-Butandiol und 56,2 g Pentamethylendiisocyanat (PDI) zugegeben. Die Mischung wird bei 80° C gerührt, bis ein Isocyanatgehalt von 1,63 % erreicht ist. Das Reaktionsgemisch wird in 780 g Aceton gelöst und dabei auf 50° C abgekühlt. In die homogene Lösung wird eine Lösung aus 5,68 g Natriumsalz der N-(2-Aminoethyl)-2-aminoethansulfonsäure, 1,17 g Diethanolamin und 3,19 g N-(2-Hydroxyethyl)-ethylendiamin in 66 g Wasser unter kräftigem Rühren gegeben. Nach 30 Minuten wird durch Zugabe von 515 g Wasser dispergiert. Nach destillativer Abtrennung des Acetons wird eine stabile wässrige Polyurethan-Polyharnstoff-Dispersion mit einen Feststoffgehalt von 50,0 Gew.-% und einer mittlere Teilchengröße der dispersen Phase, ermittelt durch Laserkorrelation, von 195 nm erhalten.

Schmelztemperatur des getrockneten Polymers = 46,0° C, Schmelzenthalpie = 37,1 J/g

Keine kristallinen Anteile im Polymer in der Dispersion nach Kältelagerung (24 h bei 5° C)!

Nach Kältelagerung: Tack bzw. Schälfestigkeit auf unverändert hohem Niveau, bleibt über einen Zeitraum von 4 Minuten erhalten (siehe Tabellen 1 und 2).

### Beispiel 2 (erfindungsgemäß):

75 mol-% PDI und 25 mol-% HDI (bezogen auf die Isocyanatkomponente)
506,3 g eines Polyesterdiols aus 1,4-Butandiol und Adipinsäure der OH-Zahl 50 mit einer Schmelztemperatur von 49° C und einer Schmelzenthalpie von 80 J/g werden 1 Stunde bei 110° C und 15 mbar entwässert. Bei 60° C werden 2,25 g 1,4-Butandiol, 42,2 g Pentamethylendiisocyanat (PDI) und 15,3 g Hexamethylendiisocyanat (HDI) zugegeben. Die Mischung wird bei 80° C gerührt, bis ein Isocyanatgehalt von 1,61 % erreicht ist. Das Reaktionsgemisch wird in 782 g Aceton gelöst und dabei auf 50° C abgekühlt. In die homogene Lösung wird eine Lösung aus 5,68 g Natriumsalz der N-(2-Aminoethyl)-2-amino¬ethansulfonsäure, 1,17 g Diethanolamin und 3,19 g N-(2-Hydroxyethyl)-ethylendiamin in 66 g Wasser unter kräftigem Rühren gegeben. Nach 30 Minuten wird durch Zugabe von 517 g Wasser dispergiert. Nach destillativer Abtrennung des Acetons wird eine stabile wässrige Polyurethan-Polyharnstoff-Dispersion mit einen Feststoffgehalt von 50,2 Gew.-% und einer mittlere Teilchengröße der dispersen Phase, ermittelt durch Laserkorrelation, von 205 nm erhalten.

Schmelztemperatur des getrockneten Polymers = 46,4° C, Schmelzenthalpie = 38,4 J/g

Keine kristallinen Anteile im Polymer in der Dispersion nach Kältelagerung (24 h bei 5° C)!

Nach Kältelagerung: Tack bzw. Schälfestigkeit auf unverändert hohem Niveau, bleibt über einen Zeitraum von 4 Minuten erhalten (siehe Tabellen 1 und 2).

### Beispiel 3 (erfindungsgemäß):

50 mol-% PDI und 50 mol-% HDI (bezogen auf die Isocyanatkomponente)
506,3 g eines Polyesterdiols aus 1,4-Butandiol und Adipinsäure der OH-Zahl 50 mit einer Schmelztemperatur von 49° C und einer Schmelzenthalpie von 80 J/g werden 1 Stunde bei 110° C und 15 mbar entwässert. Bei 60° C werden 2,25 g 1,4-Butandiol, 28,1 g Pentamethylendiisocyanat (PDI) und 30,6 g Hexamethylendiisocyanat (HDI) zugegeben. Die Mischung wird bei 80 ° C gerührt, bis ein Isocyanatgehalt von 1,59 % erreicht ist. Das Reaktionsgemisch wird in 783 g Aceton gelöst und dabei auf 50° C abgekühlt. In die homogene Lösung wird eine Lösung aus 5,68 g Natriumsalz der N-(2-Aminoethyl)-2-amino¬ethansulfonsäure, 1,17 g Diethanolamin und 3,19 g N-(2-Hydroxyethyl)-ethylendiamin in 66 g Wasser unter kräftigem Rühren gegeben. Nach 30 Minuten wird durch Zugabe von 518 g Wasser dispergiert. Nach destillativer Abtrennung des Acetons wird eine stabile wässrige Polyurethan-Polyharnstoff-Dispersion mit einen Feststoffgehalt von 50,1 Gew.-% und einer mittlere Teilchengröße der dispersen Phase, ermittelt durch Laserkorrelation, von 199 nm erhalten (siehe Tabellen 1 und 2).

Schmelztemperatur des getrockneten Polymers = 46,6° C, Schmelzenthalpie = 37,8 J/g

Keine kristallinen Anteile im Polymer in der Dispersion nach Kältelagerung (24 h bei 5° C)!

Nach Kältelagerung: Tack bzw. Schälfestigkeit auf unverändert hohem Niveau, bleibt über einen Zeitraum von 4 Minuten erhalten (siehe Tabellen 1 und 2).

### Beispiel 4 (Vergleich):

25 mol-% PDI und 75 mol-% HDI (bezogen auf die Isocyanatkomponente)
506,3 g eines Polyesterdiols aus 1,4-Butandiol und Adipinsäure der OH-Zahl 50 mit einer Schmelztemperatur von 49° C und einer Schmelzenthalpie von 80 J/g werden 1 Stunde bei 110° C und 15 mbar entwässert. Bei 60° C werden 2,25 g 1,4-Butandiol, 14,1 g Pentamethylendiisocyanat (PDI) und 46,0 g Hexamethylendiisocyanat (HDI) zugegeben. Die Mischung wird bei 80° C gerührt, bis ein Isocyanatgehalt von 1,66 % erreicht ist. Das Reaktionsgemisch wird in 785 g Aceton gelöst und dabei auf 50° C abgekühlt. In die homogene Lösung wird eine Lösung aus 5,68 g Natriumsalz der N-(2-Aminoethyl)-2-amino¬ethansulfonsäure, 1,17 g Diethanolamin und 3,19 g N-(2-Hydroxyethyl)-ethylendiamin in 66 g Wasser unter kräftigem Rühren gegeben. Nach 30 Minuten wird durch Zugabe von 519 g Wasser dispergiert. Nach destillativer Abtrennung des Acetons wird eine stabile wässrige Polyurethan-Polyharnstoff-Dispersion mit einen Feststoffgehalt von 50,1 Gew.-% und einer mittlere Teilchengröße der dispersen Phase, ermittelt durch Laserkorrelation, von 206 nm erhalten.

Schmelztemperatur des getrockneten Polymers = 46,3° C, Schmelzenthalpie = 38,2 J/g

Kristalline Anteile im Polymer in der Dispersion nach Kältelagerung (24 h bei 5° C) per DSC nachweisbar, Schmelztemperatur 44,5° C, Schmelzenthalpie 7,6 J/g.

Nach Kältelagerung: Tack bzw. Schälfestigkeit fällt über einen Zeitraum von 4 Minuten deutlich ab, da die in der Dispersion enthaltenen kristallinen Anteile im Polymer bei Aktivierung bei 50° C nicht vollständig geschmolzen werden (siehe Tabellen 1 und 2)!

### Beispiel 5 (Vergleich):

100 mol-% HDI (bezogen auf die Isocyanatkomponente)
506,3 g eines Polyesterdiols aus 1,4-Butandiol und Adipinsäure der OH-Zahl 50 mit einer Schmelztemperatur von 49° C und einer Schmelzenthalpie von 80 J/g werden 1 Stunde bei 110° C und 15 mbar entwässert. Bei 60° C werden 2,25 g 1,4-Butandiol und 61,3 g Hexamethylendiisocyanat (HDI) zugegeben. Die Mischung wird bei 80° C gerührt, bis ein Isocyanatgehalt von 1,68 % erreicht ist. Das Reaktionsgemisch wird in 787 g Aceton gelöst und dabei auf 50° C abgekühlt. In die homogene Lösung wird eine Lösung aus 5,68 g Natriumsalz der N-(2-Aminoethyl)-2-ainino¬ethansulfonsäure, 1,17 g Diethanolamin und 3,19 g N-(2-Hydroxyethyl)-ethylendiamin in 66 g Wasser unter kräftigem Rühren gegeben. Nach 30 Minuten wird durch Zugabe von 520 g Wasser dispergiert. Nach destillativer Abtrennung des Acetons wird eine stabile wässrige Polyurethan-Polyharnstoff-Dispersion mit einen Feststoffgehalt von 50,0 Gew.-% und einer mittlere Teilchengröße der dispersen Phase, ermittelt durch Laserkorrelation, von 200 nm erhalten.

Schmelztemperatur des getrockneten Polymers = 48,3° C, Schmelzenthalpie = 37,6 J/g

Kristalline Anteile im Polymer in der Dispersion nach Kältelagerung (24 h bei 5° C) vorhanden, Schmelztemperatur 40,1° C, Schmelzenthalpie 11,4 J/g.

Nach Kältelagerung: Tack bzw. Schälfestigkeit fällt über einen Zeitraum von 4 Minuten deutlich ab, da die in der Dispersion enthaltenen kristallinen Anteile im Polymer bei Aktivierung bei 50° C nicht vollständig geschmolzen werden (siehe Tabellen 1 und 2)!

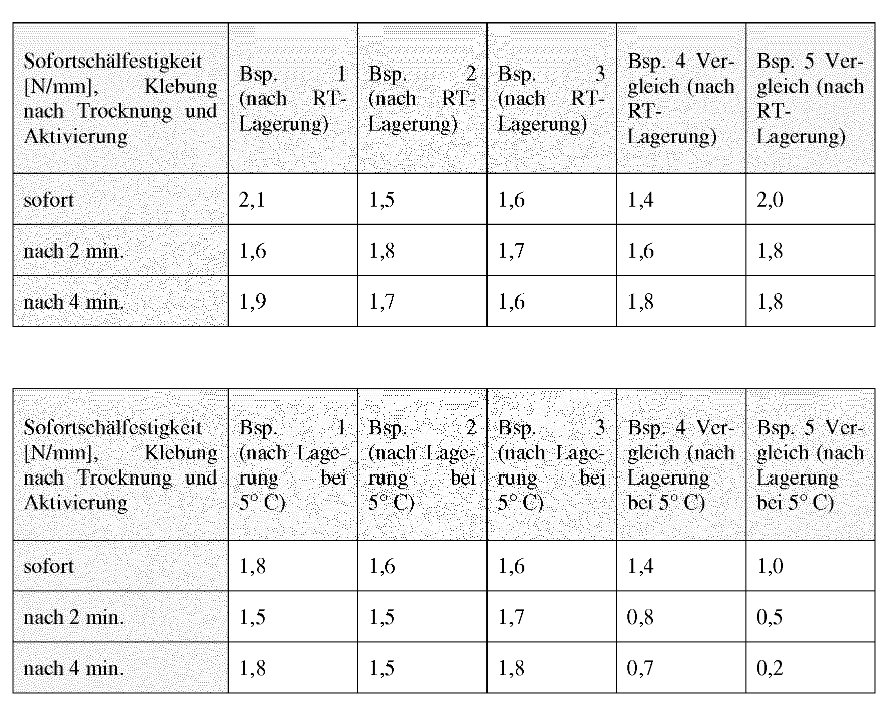

## Patentansprüche

1. Zubereitungen umfassend wässrige Polyurethan- bzw. Polyurethan-Harnstoff-Dispersionen enthaltend ein entsprechendes Polymer aufgebaut aus
A) mindestens einem kristallinen oder teilkristallinen difunktionellen Polyesterpolyol mit einem zahlenmittleren Molekulargewicht von wenigstens 400 g/mol und einer Schmelztemperatur von wenigstens 40° C und einer Schmelzwärme von wenigstens 20 J/g,
B) optional mindestens einer difunktionellen Polyolkomponente mit einem zahlenmittleren Molekulargewicht von 62 bis 399 g/mol,
C) einer Isocyanatkomponente bestehend aus Pentamethylendiisocyanat oder einer Mischung von Pentamethylendiisocyanat und Hexamethylendiisocyanat mit mindestens 50 mol-% Pentamethylendiisocyanat,
D) mindestens einer gegenüber Isocyanat reaktiven Komponente, die mindestens eine ionische oder potentiell ionische Gruppe trägt,
und
E) optional weiteren gegenüber Isocyanat reaktiven Komponenten
**dadurch gekennzeichnet, dass** das Polymer nach der Trocknung kristallin oder teilkristallin ist sowie eine Schmelztemperatur von wenigstens 40° C und eine Schmelzwärme von wenigstens 10 J/g aufweist.

2. Zubereitungen gemäß Anspruch 1, **dadurch gekennzeichnet, dass** die wässrigen Dispersionen 15 bis 60 Gew.-% Polymer und 40 bis 85 % Wasser enthalten.

3. Zubereitungen gemäß Anspruch 1, **dadurch gekennzeichnet, dass** die wässrigen Dispersionen 30 bis 50 Gew.-% Polymer und 50 bis 70 Gew.-% Wasser enthalten.

4. Zubereitungen gemäß Anspruch 1, **dadurch gekennzeichnet, dass** die wässrigen Dispersionen 40 bis 50 Gew.-% Polymer und 50 bis 60 Gew.-% Wasser enthalten.

5. Zubereitungen gemäß Ansprüchen 1 bis 4, **dadurch gekennzeichnet, dass** das Polymer 50 bis 95 Gew.-% des Bestandteils A), 0 bis 10 Gew.-% des Bestandteils B), 4 bis 25 Gew.-% des Bestandteils C), 0,5 bis 10 Gew.-% des Bestandteils D) und 0 bis 30 Gew.-% des Bestandteils E) enthält, wobei die Summe der Bestandteile 100 Gew.-% ergibt.

6. Zubereitungen gemäß Ansprüchen 1 bis 4, **dadurch gekennzeichnet, dass** das Polymer 65 bis 92 Gew.-% des Bestandteils A), 0 bis 5 Gew.-% des Bestandteils B), 6 bis 15 Gew.-% des Bestandteils C), 0,5 bis 5 Gew.-% des Bestandteils D) und 0 bis 25 Gew.-% des Bestandteils E) enthält, wobei die Summe der Bestandteile 100 Gew.-% ergibt.

7. Zubereitungen gemäß Ansprüchen 1 bis 4, **dadurch gekennzeichnet, dass** das Polymer 75 bis 92 Gew.-% des Bestandteils A), 0 bis 5 Gew.-% des Bestandteils B), 8 bis 15 Gew.-% des Bestandteils C), 0,5 bis 4 Gew.-% des Bestandteils D) und 0 bis 15 Gew.-% des Bestandteils E) enthält, wobei die Summe der Bestandteile 100 Gew.-% ergibt.

8. Zubereitungen gemäß Ansprüchen 1 bis 4, **dadurch gekennzeichnet, dass** das Polymer 80 bis 90 Gew.-% des Bestandteils A), 0 bis 3 Gew.-% des Bestandteils B), 8 bis 14 Gew.-% des Bestandteils C), 0,5 bis 3 Gew.-% des Bestandteils D) und 0 bis 10 Gew.-% des Bestandteils E) enthält, wobei die Summe der Bestandteile 100 Gew.-% ergibt.

9. Zubereitungen gemäß Ansprüchen 1 bis 8, **dadurch gekennzeichnet, dass** sie als zusätzliche Komponente einen oder mehrere Vernetzer, vorzugsweise Isocyanate, Carbodiimide und/oder Aziridine, besonders bevorzugt Isocyanate und Carbodiimide, ganz besonders bevorzugt Isocyanate enthalten.

10. Verwendung der Zubereitungen gemäß Ansprüchen 1 bis 9 als Thermoaktivierklebstoffe.

11. Klebverbünde umfassend mit den Zubereitungen gemäß Ansprüchen 1 bis 9 verklebte Substrate.

12. Klebverbünde gemäß Anspruch 11, **dadurch gekennzeichnet, dass** es sich um verklebte Flächengebilde handelt.

13. Klebverbünde gemäß Ansprüchen 11 und 12, **dadurch gekennzeichnet, dass** es sich bei den verklebten Flächengebilden um mit Schuhschäften aus Leder und Kunstleder verklebte Schuhsohlen aus Gummimaterialien oder Kunststoffen handelt.

14. Mit Zubereitungen gemäß Ansprüchen 1 bis 9 verklebte Substrate.

15. Verfahren zum Kleben von Substraten, in welchem auf das oder die zu verklebenden Substrate eine Zubereitung gemäß Ansprüchen 1 bis 9 zur Erzeugung einer Klebstoffschicht aufgebracht wird, nach vollständiger Verdunstung oder während der Verdunstung des Wassers die so erhaltene Klebstoffschicht durch Erwärmen auf mindestens die Aktiviertemperatur der Schicht und Aufschmelzen des teilkristallinen Polymers aktiviert wird und abschließend das oder die Substrate gefügt werden.

16. Verfahren gemäß Anspruch 15, in welchem auf das oder die zu verklebenden Substrate eine Zubereitung gemäß Ansprüchen 1 bis 9 zur Erzeugung einer Klebstoffschicht aufgebracht wird, die Trocknung und Aktivierung gleichzeitig in einem Schritt bei niedrigen Temperaturen im Bereich von 50°C erfolgt und abschließend das oder die Substrate gefügt werden.
